# EUROPÄISCHE PATENTANMELDUNG

(11) **EP 0 879 969 A2**
(43) Veröffentlichungstag der Anmeldung: **25.11.1998**
(21) Anmeldenummer: 98109049.1
(22) Anmeldetag: 19.05.1998
(51) Int. Cl.: F15B 11/048

(54) **Verfahren zum Steuern eines fluidischen Antriebes**

(30) Priorität: 23.05.1997 DE 19721632
(71) Anmelder: Moosmann, Bernhard, 78739 Hardt (DE)
(72) Erfinder: Moosmann, Bernhard, 78739 Hardt (DE)
(74) Vertreter: Neymeyer, Franz, Dipl.-Ing. (FH)

(57) **Zusammenfassung**

Es sind Verfahren zum Steuern fluidischer Antriebe bekannt, die mit einer elektronischen Steuereinrichtung (18) zum Ansteuern eines Steuerelementes (13) für den Antrieb (1) versehen sind. Der Steuereinrichtung (18) werden durch einen über eine Schaltfahne (10, 11, 12) elektronisch schaltbaren Sensor (8, 9) Steuersignale für eine zeitliche Steuerung beispielsweise der Bremsphase **t**_{**3**} des Antriebes (1) zum sanften Anfahren seiner Endlage zugeführt. Zur Steuerung von Funktionen des Antriebes (1) selbst und von mit dem Antrieb (1) in funktionellem Zusammenhang stehender Baugruppen ist vorgesehen, daß zu einem Zeitpunkt **T**_{**0**} ein erstes Meßsignal **S**_{**0**} erzeugt wird, und daß zu einem späteren, in der Bewegungsphase des Antriebes (1) liegenden Zeitpunkt **T**_{**1**} ein zweites Meßsignal **S**_{**1**} erzeugt wird, und daß die Steuereinrichtung (18) aus der Zeitdifferenz **t**_{**1**} des ersten Meßsignals **S**_{**0**} und des zweiten Meßsignals **S**_{**1**} die Zeitspannen für den Beginn und die Dauer der genannten Funktionen berechnet werden.

## Beschreibung

Die Erfindung betrifft ein Verfahren sowie eine Vorrichtung zur Durchführung des Verfahrens zum Steuern wenigstens eines fluidischen Antriebes mit einer elektronischen Steuereinrichtung zum Ansteuern wenigstens eines Steuerelementes für den Antrieb, wobei der Steuereinrichtung für wenigstens eine Bewegungsrichtung des Antriebes durch wenigstens einen über wenigstens eine Schaltfahne elektronisch schaltbaren Sensor Steuersignale zugeführt werden.

Es ist eine Vorrichtung bzw. ein Verfahren der gattungsgemäßen Art (DE 44 10 103 C1) mit einer Steuerung für das die Antriebskraft übertragende Element bekannt. Dieser Antrieb weist in zumindest einer seiner Endlagen eine Dämpfung auf, welche durch eine entsprechende Ansteuerung des Antriebskraftelementes bewirkt wird und zusätzlich zu einem mechanischen Dämpfungssystem vorgesehen sein kann. Um ein besonders sanftes Anfahren dieser Endlage des Antriebskraftelementes zu erzielen, ist die Steuerung mit einem Gegenpulsmodul versehen, das über einen Vorpositionier-Sensor ansteuerbar ist, welcher zumindest einer Bewegungsrichtung zugeordnet ist. Dazu ist ein erstes Schaltelement und ein zweites Schaltelement vorgesehen, welche jeweils einer der Endlagen des Antriebskraftelementes zugeordnet sind. Für eine Bewegungsrichtung ist dabei beispielsweise das erste Schaltelement bestromt und das zweite Schaltelement nicht bestromt, so daß der Antrieb einseitig mit Druck beaufschlagt wird und sich in der vorbestimmten Richtung bewegt bzw. beschleunigt wird. Zum sanften Anfahren der Endlage muß das Antriebskraftelement des Antriebes abgebremst werden. Zu diesem Zweck wird durch das Gegenpulsmodul über den Vorpositioniersensor eine zeitlich einstellbare Umsteuerung der beiden Schaltelemente bewirkt, so daß der Antrieb in entgegengesetzter Richtung mit Druck beaufschlagt wird und dadurch eine Bremswirkung erzeugt wird. Diese Funktionsweise wird auf der Grundlage einer Logikschaltung erreicht, wobei auch größere Massen beherrschbar sein sollen. Desweiteren soll durch die einstellbare Umsteuerung und die Aufteilung der Bremsphase erreicht werden, daß die Einstellung der Zeiten weniger kritisch wird, da eine niedrige Geschwindigkeit am Ende der Bremsphase leichter einzustellen ist. Durch diese zusätzliche Dämpfung können dabei zusätzliche mechanische Stoßdampfer mit weniger Leistungsreserve ausgelegt werden, was sich selbstverständlich auf die Baugröße und den Preis dieser zusätzlichen mechanischen Stoßdämpfer günstig auswirkt.

Desweiteren sollen in einem bestimmten Zeitabschnitt nach der Umsteuerung des ersten und des zweiten Schaltelementes im Sinne eines Nachlaufes beide Schaltelemente gleichzeitig bestrombar sein. Dadurch wird der Antrieb beidseitig mit Systemdruck beaufschlagt, wodurch eine Art Schwebezustand erreicht wird und sich das Antriebskraftelement auf Grund seiner Massenträgheit antriebslos im Sinne eines Nachlaufes weiter bewegt. Nach dieser Schwebephase soll wieder das ursprünglich aktive Schaltelement bestromt werden, um ein sicheres Anlegen des Antriebskraftelementes in die Endlage zu gewährleisten.

Desweiteren ist die Umsteuerung des ersten und des zweiten Schaltelementes mittels eines ersten Stellelementes verzögerbar, wodurch im Prinzip eine exakte mechanische Justierung des Vorpositionier-Sensors entfallen kann. Dabei ist das erste und das zweite Schaltelement an ein zweites Stellelement zum Einstellen der Gegenimpuls-Dauer angeschlossen, wodurch ein kraftloses Annähern des Antriebskraftelementes an einen Anschlag mit niedrigerer Geschwindigkeit erfolgen kann. Zum Einstellen der Nachlaufzeit ist ein drittes Stellelement vorgesehen, an welches das erste oder das zweite Schaltelement angeschlossen ist. Durch diese Maßnahmen soll das System weniger empfindlich gegen Schwankungen der Betriebsbedingungen sein. Als zweckmäßig soll desweiteren eine Schaltlogik zur Erkennung des ersten Einschaltens des Antriebes und zur Anpassung der Zeiten an die gegenüber stationärem Betrieb geänderten Startbedingungen vorgesehen sein. Für jede Fahrtrichtung soll desweiteren die Steuerung getrennt einstellbare Stellelemente aufweisen. Ferner sollen durch geeignet geformte Schaltfahnen mit insgesamt zwei Sensoren und durch deren codierte Auswertung je zwei Vorpositionen und zwei Endlagen erkennbar sein.

Das erste und zweite Schaltelement bestehen bei der bekannten Vorrichtung jeweils aus einem Schaltventil, das über das Gegenpulsmodul und eine speicherprogrammierbare Steuerung ansteuerbar sind.

Dieser bekannte fluidische Antrieb verwendet folglich für jede Fahrtrichtung jeweils einen Vorpositioniersensor und jeweils einen Endlagensensor, sowie für jede Fahrtrichtung getrennt fest einstellbare Zeiten und zwei Schaltelemente zur Umsteuerung des Antriebes, wodurch ein sanftes Abbremsen bewirkt werden soll.
Die fest eingestellten Zeiten führen jedoch bei veränderten Betriebsbedingungen wie Druckschwankungen, Änderungen der Last oder der Reibung zu Störungen, welche bis zu Schäden am Antrieb oder der Maschine führen können. Außerdem kann bei diesem bekannten System durch das Prinzip der Gegensteuerung über das Gegenpulsmodul und die Umsteuerung der Schaltelemente bei Störungen wie Energieausfall, Kabelbruch, defekten Ventilen oder bei Ausfall der Steuerung die Bewegung des Antriebes nicht mehr abgebremst werden, so daß dieser ungebremst in die Endlage fährt. Ein solches ungebremstes Anfahren der Endlagen hat meist Beschädigungen des Antriebes zur Folge. Weiter wird durch das Gegensteuern, insbesondere bei pneumatischen Antrieben, ein wesentlich größerer Energiebedarf als bei herkömmlichen Dämpfungssystemen benötigt, da zum Abbremsen im Antrieb das antreibende Zylindervolumen entlüftet und ein der Bewegungsrichtung entgegengesetzter Gegendruck aufgebaut werden muß.

Demgemäß liegt der Erfindung die Aufgabe zugrunde, ein Verfahren zur Steuerung eines fluidischen Antriebes sowie eine Vorrichtung zur Durchführung dieses Verfahrens anzugeben, bei welchem die oben genannten Nachteile vermieden sind. Weiter soll dieses Verfahren auch zur Steuerung von Funktionen des Antriebes selbst und zur Steuerung von mit dem Antrieb in funktionellem Zusammenhang stehender Baugruppen geeignet sein.

Die Aufgabe wird erfindungsgemäß durch die Merkmale der kennzeichnenden Teile der Ansprüche 1 und 10 in Zusammenwirken mit den Merkmalen der jeweils zugehörigen Oberbegriffe dieser Ansprüche gelöst.

Durch das Erzeugen des ersten Meßsignals **S**₀ zum Zeitpunkt **T**₀ und des zweiten Meßsignals **S**₁ zu einem späteren, in der Bewegungsphase liegenden Zeitpunktes **T**₁ wird im wesentlichen die Geschwindigkeit bzw. der Bewegungszustand des Antriebes zu Beginn oder annähernd beliebig während seiner Bewegungsphase ermittelt und in der Steuereinrichtung zur weiteren Berechnung zwischengespeichert. Die Steuereinrichtung ermittelt aus den ihr vorgebbaren, tatsächlichen Bewegungsparametern des Antriebes und aus der Zeitdifferenz **t**₁ des ersten Meßsignals **S**₀ und des zweiten Meßsignals **S**₁ weitere Zeitintervalle, welche für den Beginn und/oder die Dauer weiterer nachfolgender Funktionen des Antriebes und/oder weiterer mit dem Antrieb in Funktionszusammenhang stehender Baugruppen benötigt werden.

Die Ermittlung der Zeitspanne **t**_{**1**} kann dabei gemäß Anspruch 2 dadurch erfolgen, daß das erste Meßsignal **S**_{**0**} direkt von einem Starsignal **S**_{**Start**} der Steuereinrichtung oder auch einer übergeordneten Steuerung abgeleitet wird. Dies bedeutet, daß der Zeitpunkt **T**_{**0**} mit dem Beginn der Bewegung des Antriebes zusammenfällt und daß somit die Ermittlung der Zeitdifferenz **t**₁ vom Beginn der Bewegung aus der ersten Endlage bzw. der ersten Ruhelage des Antriebes erfolgt. Zum Erzeugen des zweiten Meßsignals **S**₁ kann beispielsweise eine erste Schaltfahne verwendet werden, welche sich mit dem bewegten Bauteil des Antriebes während der Bewegungsphase des Antriebes mitbewegt. Durch diese erste Schaltfahne wird beispielsweise ein ortsfester, erster Sensor geschaltet, der in der Ausgangsruhelage des Antriebes ortsfest im Bereich der Schaltfahne angeordnet ist. Nach dem Bewegungsbeginn verläßt die Schaltfahne den Wirkbereich des ersten Sensors, wodurch in diesem zu einem späteren Zeitpunkt **T**_{**1**} nach **T**_{**Start**} bzw. **T**_{**0**} das zweite Meßsignal **S**₁ während er Bewegungsphase des Antriebes erzeugt wird. Die Zeitdifferenz **t**₁ zwischen dem Zeitpunkt **T**_{**Start**} bzw. **T**_{**0**} für das erste Meßsignal **S**₀, welches vom Startsignal **S**_{**Start**} abgeleitet wird oder diesem entspricht, und dem Zeitpunkt **T**₁ für das zweite Meßsignal **S**₁ wird von der Steuereinrichtung erfaßt und für weitere Berechnungen zur Bewegungssteuerung des Antriebes zwischengespeichert.

Die beschriebene Art der Signalerzeugung, einerseits des ersten Meßsignals **S**₀ zum Zeitpunkt **T**_{**0**}, welcher dem Startzeitpunkt **T**_{**Start**} der Bewegungsphase des Antriebes entspricht, und andererseits des zweiten Meßsignals **S**₁ zum Zeitpunkt **T**₁ wird insbesondere für äußerst kurze Antriebe mit äußerst kurzen Hublängen verwendet, da dort die Bewegungsdauer insgesamt nur einige Millisekunden beträgt und somit auch nur kurze Zeiträume für die Erfassung von **t**₁ zur Verfügung stehen. Diese äußerst kurzen Zeiträume zur Erfassung von **t**_{**1**} resultieren insbesondere daraus, daß nachfolgend zu aktivierende Funktionen des Antriebes oder mit diesem in Funktionszusammenhang stehender Bauteile schon vor dem Überfahren der Mittelstellung des Antriebes erfolgen müssen, um für die Einleitung dieser Nachfolgefunktionen nicht unnötig Zeit zu verlieren.

Für Antriebe mit mittleren Hublängen kommt das Verfahren gemäß Anspruch 3 zur Anwendung. Das erste Meßsignal **S**₀ wird zeitlich nach dem Startsignal **S**_{**Start**} der Steuereinrichtung oder der übergeordneten Steuerung während der Bewegungsphase des Antriebes erzeugt. Die Art der Erzeugung des ersten Meßsignals **S**_{**0**} kann dabei analog zur Erzeugung des zweiten Meßsignals **S**_{**1**} gemäß Anspruch 2 erfolgen, so daß der Zeitpunkt **T**_{**0**} durch den Zeitpunkt bestimmt ist, in welchem eine erste Schaltfahne den Wirkbereich eines ersten Sensors verläßt und damit in diesem das erste Meßsignal **S**_{**0**} auslöst. Zum Erzeugen des zweiten Meßsignals **S**_{**1**} zum Zeitpunkt **T**₁ kann beispielsweise eine zweite Schaltfahne verwendet werden, welche der ersten Schaltfahne nachgeordnet ist und beispielsweise etwa mittig am bewegten Bauteil des Antriebes angeordnet ist und sich im Laufe der Bewegungsphase des Antriebes am ortsfesten Sensor vorbei bewegt. Beim Eintritt dieser zweiten Schaltfahne in den Wirkbereich des ersten Sensors wird dieser Sensor beschaltet, so daß dieser das zweite Meßsignal **S**₁ zu dem späteren Zeitpunkt **T**_{**1**} an die Steuereinrichtung abgibt. Jetzt kann wiederum die zeitliche Differenz **t**₁ zwischen dem ersten Meßsignal **S**₀ und dem zweiten Meßsignal **S**₁ ermittelt werden, so daß weitere Zeitintervalle, welche für den Beginn und/oder die Dauer weiterer nachfolgender Funktionen des Antriebes und/oder weiterer mit dem Antriebe in Funktionszusammenhang stehender Baugruppen durch die Steuereinrichtung aus **t**_{**1**} berechenbar sind.

Für äußerst lange Antriebe ist das Verfahren gemäß Anspruch 4 vorgesehen. Das erste Meßsignal **S**_{**0**} zum Zeitpunkt **T**_{**0**} kann für solche Antriebe durch eine etwa mittig am bewegten Bauteil des Antriebes angeordnete Schaltfahne beim Eintritt in den Wirkbereich eines ersten Sensors erzeugt werden. Das zweite Meßsignal **S**_{**1**} hingegen wird beim Austritt der mittigen Schaltfahne aus dem Wirkbereich des Sensors erzeugt, so daß durch die Abgabe dieses zweiten Meßsignals **S**_{**1**} der Zeitpunkt **T**_{**1**} zur Festlegung der Zeitspanne **t**_{**1**} eindeutig bestimmt ist. Die Zeitspanne **t**_{**1**} wird folglich gemäß Anspruch 4 während der Bewegungsphase des Antriebes ermittelt und in oben angegebener Art und Weise durch die Steuereinrichtung zur Berechnung des Beginns und der Dauer der weiteren Funktionen weiterverarbeitet.

Gemäß Anspruch 5 kann die Zeitspanne **t**_{**1**} beispielsweise zur Berechnung einer Bremsphase **t**_{**3**} des Antriebes verwendet werden. Dazu wird durch die Steuereinrichtung eine entsprechende Zeitspanne **t**₂ für den Zeitpunkt **T**_{**2**} des Beginns der Bremsphase **t**₃ und für das Ende der Bremsphase **t**₃ zum Zeitpunkt **T**_{**3**} berechnet, woraus sich die Dauer **t**_{**3**} der Bremsphase automatisch ergibt. Diese Bremsphase **t**_{**3**} wird dabei zum sanften Anfahren einer Endlage des Antriebes benötigt, so daß der Antrieb zumindest kurz vor erreichen der Endlage zumindest soweit abgebremst wird, daß kein hartes Anschlagen des Antriebes in seiner Endlage erfolgen kann. Für die Berechnung des Beginns **T**_{**2**} und für das Ende **T**_{**3**} der Bremsphase **t**_{**3**} werden empirisch ermittelte Werte für die Umrechnung dieser Zeitpunkte und Zeitintervalle aus den tatsächlichen Bewegungsparametern eines Antriebes abgeleitet, so daß eine Berechnung aus der Zeitdifferenz **t**_{**1**} sicher gewährleistet ist.

Diese empirisch ermittelbaren Werte sind dabei von den tatsächlichen Bewegungsparametern des Antriebes abhängig, wie beispielsweise die zu bewegende Masse, die Betriebsverhältnisse für den Systemdruck sowie dem Kolbendurchmesser, Ventildurchfluß und Reibung beispielsweise bei der Verwendung von Kolbenantrieben. Die gesamte Bewegungsdauer ist im wesentlichen von diesen Parametern abhängig. Zur Einleitung der Bremsphase des Antriebes wird dabei zum Zeitpunkt **T**₂ durch die Steuereinrichtung über ein Steuerelement ein Bremssignal **S**₂ für den Beginn und ein zweites Bremssignal **S**₃ für das Ende der Bremsphase abgegeben. Bei Verwendung beispielsweise eines doppelt wirkenden Pneumatikzylinders sperrt das Steuerelement die entsprechenden Eingänge bzw. Ausgänge des Antriebes, so daß durch die Bewegung in diesem automatisch ein Luftpolster aufgebaut wird, welches zum Abbremsen des Antriebes dient.

Gemäß Anspruch 6 kann am Ende der Bremsphase **t**_{**3**} zum Zeitpunkt **T**_{**3**} ein Nachlaufsignal **S**_{**N**} generiert werden, durch welches über die Steuereinrichtung und das Steuerelement der Antrieb zum sicheren Erreichen seiner Endlage in Bewegungsrichtung wieder mit Systemdruck beaufschlagt wird. Dies bedeutet, daß am Ende der Bremsphase **t**_{**3**} zum Zeitpunkt **T**₃, zu welchem der Antrieb eine äußerst geringe Bewegungsgeschwindigkeit aufweist, ein erneuter Vorschub des Antriebes in Bewegungsrichtung in Richtung auf seine Endlage erfolgt.
In dieser Endlage ist bei pneumatischen Antrieben in der Regel ein über ein Drosselventil abbaubares Restluftpolster vorhanden, welches zur Enddämpfung dient. Zum Überwinden dieses Restluftpolsters wird durch das Nachlaufsignal **S**_{**N**} eine erneute Druckbeaufschlagung des Antriebes in Bewegungsrichtung bewirkt, so daß dieses Restluftpolster über das Drosselventil entweichen kann und der Antrieb sicher in seine gewünschte Endlage gelangt.

Gemäß Anspruch 7 wird aus der Zeitdifferenz **t**₁ zusätzlich zu den Zeitspannen **t**_{**2**} und **t**_{**3**} und denn zugehörigen Zeitpunkten **T**_{**2**} und **T**_{**3**} ein weiterer Zeitpunkt **T**_{**R**} für ein Rückmeldesignal **S**_{**Rück2**} berechnet, welches im Regelfall vor dem Erreichen der Endlage des Antriebes liegt. Durch dieses Rückmeldesignal **S**_{**Rück2**} können weitere Funktionen eines Gesamtsystems frühzeitig eingeleitet werden, um beispielsweise Schaltzeiten von Schaltventilen zu kompensieren.

Dies kann insbesondere dann der Fall sein, wenn beispielsweise zwei miteinander gekoppelte Antriebe zwei rechtwinklig zueinander liegende Bewegungen nacheinander ausführen sollen und die Bewegung des zweiten Antriebes spätestens beim Erreichen der Sollendlage des ersten Antriebes beginnen soll. Da der zweite Antrieb durch entsprechende Ventilsteuerungen angesteuert werden muß und diese Ventile eine gewisse Schaltzeit aufweisen, kann durch die voreilende Rückmeldung gemäß Anspruch 7 diese Schaltzeit kompensiert werden, so daß der zweite Antrieb tatsächlich bei Erreichen der Endlage des ersten Antriebes mit seiner zweiten Funktionsbewegung beginnt. Dadurch ist eine erhebliche Reduzierung der Bewegungszeiten des gesamten Systemes erreichbar.

Das Rückmeldesignal **S**_{**Rück2**} muß aber nicht zwingend voreilend, d.h. vor dem Ende der Bewegungsphase des ersten Antriebes an die Steuereinrichtung oder an die übergeordnete Steuerung ausgegeben werden. Es sind auch Anwendungsfälle vorstellbar, bei welchen das Rückmeldesignal **S**_{**Rück2**} gleichzeitig mit dem Erreichen oder nach dem Erreichen der Endlage des ersten Antriebes abgegeben wird. Dies ist z.B. erforderlich, wenn eine absolut ruhige Endstellung des ersten Antriebes für einen weiteren Arbeitsgang notwendig ist. Dies kann der Fall sein, wenn ein zweiter Antrieb mit einem Lötwerkzeug bestückt ist, das definiert in der Endlage des ersten Antriebes mittels des zweiten Antriebes auf die Lötstelle abgesenkt werden muß. Dazu ist es erforderlich, daß das Lötgerät möglichst ruhig auf die Lötstelle zum Verlöten zweier Bauteile abgesenkt wird. Damit nicht Schwingungen durch den Bremsvorgang des ersten Antriebes auf das Lötgerät übertragen werden, was zu unsauberen Lötstellen führen würde, wird somit die weitere Funktion des Absenkens frühestens mit dem Erreichen der Endlage des ersten Antriebes eingeleitet, so daß bis zum Erreichen der Lötstelle das Lötgerät absolut schwingungsfrei ist.

Die Berechnung der Zeitspanne **t**_{**4soll**} gemäß Anspruch 8 dient der theoretischen Überprüfung der Funktionssicherheit des Antriebes. Durch die Zeitspanne **t**_{**4soll**} wird der theoretische Zeitpunkt **T**_{**4soll**} für das Ende der Bewegungsphase des Antriebes bestimmt. Zu diesem theoretisch berechneten Zeitpunkt **T**_{**4soll**}, kann am Ende der Bewegungsphase mit Erreichen der Endlage zum Zeitpunkt **T**_{**4**} ein Bestätigungssignal **S**_{**4**} für das tatsächliche Ende der Bewegungsphase an die Steuereinrichtung abgegeben werden, so daß durch einen Zeitvergleich zwischen dem theoretischen Zeitpunkt **T**_{**4soll**} und dem tatsächlichen Zeitpunkt **T**_{**4**} und einer entsprechenden, maximal zulässigen Abweichung Fehlfunktionen des Antriebes erkennbar sind.

In gleicher Weise können der Steuereinrichtung gemäß Anspruch 9 zu den tatsächlich gemessenen Zeitpunkten **T**_{**0**}**, T**_{**1**} und **T**_{**4**} bzw. den zugehörigen Zeitintervallen **t**_{**0**}, **t**_{**1**} und **t**_{**4**} Standardwerte **T**_{**0St**}, **T**_{**1St**} und **T**_{**4St**} bzw. **t**_{**0St**}, **t**_{**1St**} und **t**_{**4St**} vorgegeben werden, so daß aus einem entsprechenden Zeitvergleich auch hieraus Fehlfunktionen des Antriebes abgeleitet werden können, so daß die Steuerung durch entsprechende Ansteuerung eines Schaltelementes die Bewegung des Antriebes jederzeit abbrechen, den Verlauf des Bremsvorganges beeinflussen oder auch den Beginn der Bewegungsphase des Antriebes oder einer nachfolgenden Bewegungsphase eines weiteren Antriebes unterbrechen kann. Die zulässigen Abweichungen der gemessen Werte **T**_{**0**}, **T**_{**1**} und **T**_{**4**} bzw. **t**_{**0**}, **t**_{**1**} und **t**_{**4**} von den vorgegebenen Standardwerten **T**_{**0St**}, **T**_{**1St**} und **T**_{**4St**} bzw. **t**_{**0St**}, **t**_{**1St**} und **t**_{**4St**} sind in entsprechender Weise der Steuereinrichtung vorgebbar, so daß eine optimale Betriebssicherheit des Antriebes bzw. der Steuerung für einen Antriebe erreichbar ist.

Anspruch 10 betrifft eine Vorrichtung zur Durchführung des Verfahrens nach Anspruch 1 oder 2. Diese Vorrichtung weist für eine erste Bewegungsrichtung des Antriebes einen ersten Sensor auf, der etwa mittig zwischen den beiden Endlagen des Antriebes ortsfest in unmittelbarer Nähe zur Bewegungsbahn des bewegten Bauteiles des Antriebes angeordnet ist. Durch diese Anordnung in der unmittelbaren Nähe zur Bewegungsbahn des bewegten Bauteiles des Antriebes ist dieser erste Sensor durch eine erste, am bewegten Bauteil des Antriebes angeordnete Schaltfahne bedämpfbar bzw. beschaltbar, so daß beim Vorbeistreichen durch diesen Sensor beim Eintreten der Schaltfahne in den Wirkbereich des Sensors und beim Verlassen seines Wirkbereiches entsprechende Signale erzeugt und an die Steuereinrichtung abgegeben werden. Zur Durchführung des Verfahrens nach Anspruch 2 wird durch diese erste Schaltfahne in Zusammenwirken mit dem ersten Sensor das zweite Meßsignal **S**_{**1**} erzeugt und somit der Zeitpunkt **T**_{**1**} zur Berechnung von **t**_{**1**} festgelegt.

Anspruch 11 betrifft eine Vorrichtung zur Durchführung des Verfahrens nach Anspruch 1 oder 3, welches für Antriebe mit mittleren und längeren Stellwege vorgesehen ist. Für eine erste Bewegungsrichtung des Antriebes ist ebenfalls ein erster Sensor vorgesehen, welcher etwa mittig zwischen den beiden Endlagen des Antriebes ortsfest in unmittelbarer Nähe zur Bewegungsbahn des bewegten Bauteils des Antriebes angeordnet ist. An einem Ende des Bewegten Bauteils des Antriebes ist eine erste Schaltfahne angeordnet, welche sich in der einen Endlage des Antriebes im Wirkbereich des ersten Sensors befindet. Nach Beginn der Bewegungsphase des Antriebes verläßt diese erste Schaltfahne den Wirkbereich des ersten Sensors und erzeugt in diesem ein erstes Meßsignal. Zum Erzeugen eines zweiten Meßsignals durch den ersten Sensor ist der ersten Schaltfahne eine weitere Schaltfahne nachgeordnet und beispielsweise mittig am bewegten Bauteil des Antriebes angeordnet. Durch diese weitere Schaltfahne wird im ersten Sensor, wenn sie den Wirkbereich des Sensors verläßt das zweite Meßsignal zeitlich nach dem ersten Meßsignal erzeugt.

Die Vorrichtung gemäß Anspruch 12 ist zur Durchführung des Verfahrens nach Anspruch 1 oder 4 vorgesehen. Diese Vorrichtung weist für eine erste Bewegungsrichtung ebenfalls einen ersten Sensor auf, der ebenfalls etwa mittig zwischen den beiden Endlagen des Antriebes ortsfest angeordnet ist. Diesem Sensor ist eine etwa mittig am bewegten Bauteil des Antriebes angeordnete Schaltfahne zugeordnet. Durch diese Schaltfahne wird im ersten Sensor ein erstes Meßsignal erzeugt, wenn die Schaltfahne in den Wirkbereich des Sensors eintritt. Ein zweites Meßsignal wird zu einem späteren Zeitpunkt dann erzeugt, wenn die Schaltfahne wieder aus dem Wirkbereich des Sensors austritt. Auch diese Vorrichtung ist vorzugsweise für Antriebe mit mittleren und längeren Stellwegen vorgesehen. Das erste und das zweite Meßsignal werden, wie auch bei der Vorrichtung gemäß Anspruch 11 während der Bewegungsphase des Antriebes erzeugt.

Gemäß Anspruch 13 kann ein zweiter Sensor vorgesehen sein, welcher im Sinne einer redundanten Anordnung für die erste Bewegungsrichtung zusätzlich zum ersten Sensor diesem bezüglich der Bewegungsbahn des bewegten Bauteils des Antriebes gegenüberliegend angeordnet ist. Somit werden durch beide Sensoren zu den gleichen Zeitpunkten dieselben Singale geliefert, wobei die Schaltfahnen gemäß der Ansprüche 10 bis 12 in entsprechender Weise auch beiden Sensoren zugeordnet sind und gleichzeitig in den Wirkbereich beider Sensoren eintreten bzw. austreten. Damit ist in einfacher Weise ein evtl. auftretende Ausfall eines Sensors kompensierbar und zum einen eine Fehlermeldung ausgegeben werden kann und auch die Funktionssicherheit des Steuerung und damit des Antriebes erhöht wird.

Der zweite Sensor kann allerdings auch, wie dies explizit in Anspruch 14 angegeben ist, unabhängig vom ersten Sensor eingesetzt werden und ausschließlich für die Aufnahme von Meßwerten für die zweite Bewegungsrichtung vorgesehen sein.

Gemäß Anspruch 14 ist insbesondere für kurze Stellwege eine zweite Schaltfahne vorgesehen, welche am gegenüberliegenden Ende des bewegten Bauteils des Antriebes angeordnet ist. Diese zweite Schaltfahne kann dabei einerseits in einer Bewegungsrichtung zum Erzeugen des Bestätigungssignals gemäß Anspruch 8 am Ende der Bewegungsphase des Antriebes vorgesehen werden. Andererseits ist die zweite Schaltfahne aber für die Entgegengesetzte Bewegungsrichtung zum Erzeugen des ersten Meßsignals **S**_{**0**} und/oder des zweiten Meßsignals **S**_{**1**} zu verwenden, so daß der Antrieb in beiden Bewegungsrichtungen vollständig steuerbar ist. Für die zweite Bewegungsrichtung übernimmt dann die erste Schaltfahne die Aufgabe zum Erzeugen des Bestätigungssignals **S**_{**4**}. Sind gemäß Anspruch 13 ein erster und ein zweiter Sensoren vorgesehen, kann die erste Schaltfahne funktionell dem ersten und die zweite Schaltfahne dem zweiten Sensor zugeordnet sein.

Für diese Zuordnung sind die beiden Sensoren in einem gewissen Abstand voneinander im Bereich der Bewegungsbahn des bewegten Bauteiles des Antriebes angeordnet, wobei die Anordnung der entsprechend zugeordneten Schaltfahne so gewählt ist, daß die eine nur mit dem einen Sensor zusammenwirken kann und die andere nur mit dem anderen.

Für mittlere und längere Stellwege ist gemäß Anspruch 15 eine dritte Schaltfahne vorgesehen, welche beiden Sensoren zugeordnet ist, und welche etwa mittig am bewegten Bauteil des Antriebes angeordnet ist. Diese Anordnung kann auch beispielsweise für die Durchführung des Verfahrens gemäß Anspruch 3 oder 4 vorgesehen. Die Aktivierung des ersten und zweiten Sensors über die Steuereinrichtung ist dabei abhängig von der Bewegungsrichtung des Antriebes, so daß für eine Bewegungsrichtung die mittlere Schaltfahne mit dem ersten Sensor zur Signalerzeugung zusammenwirkt und für die andere, gegenläufige Bewegungsrichtung mit dem zweiten Sensor.

Es ist auch vorgesehen, daß die mittlere Schaltfahne beide Sensoren für beide Bewegungsrichtungen beschaltet und somit beide Sensoren zur Signalerzeugung für beide Bewegungsrichtungen verwendet werden. Dies ist für die Betriebssicherheit der Steuerung im Sinne einer Redundanten Anordnung äußerst vorteilhaft, da bei Ausfall eines Sensors die Funktionssicherheit des Antriebes weiter gewährleistet bleibt und der Steuerungsprozeß bei Ausfall eines Sensors nicht unterbrochen werden muß.

Die mittlere bzw. dritte Schaltfahne kann für längere Antriebe in Achsrichtung des Antriebes länger ausgebildet sein, so daß die Zeitpunkte **T**_{**0**} und **T**_{**1**} zur Festlegung der Zeitspanne **t**_{**1**} einen genügenden zeitlichen Abstand zueinander aufweisen, so daß eine eindeutige Erfassung des jeweiligen Bewegungszustandes des Antriebes durchführbar ist.

Gemäß Anspruch 16 weist die Vorrichtung als Steuerelement ein 5/3-Wegeventil mit gesperrter Mittelstellung auf, durch welches beide Bewegungsrichtungen des Antriebes steuerbar sind. Durch dieses 5/3-Wegeventil mit gesperrter Mittelstellung wird erreicht, daß bei stromlosem Zustand des 5/3-Wegeventiles beide Eingänge des Antriebes ,z.B. eines doppelt wirkenden Pneumatikzylinders, gesperrt sind, so daß der Antrieb sich insbesondere in Störfällen selbst abbremst. Desweiteren hat die Verwendung des 5/3-Wegeventiles den großen Vorteil, daß lediglich ein Steuerelement zur Steuerung beider Bewegungsrichtungen notwendig ist und somit dessen Ansteuerung erheblich vereinfacht wird. Weiter wird durch dieses 5/3-Wegeventil mit gesperrter Mittelstellung erreicht, daß keine zusätzliche Druckluft zum Abbremsen auf eines pneumatischen Antrieb aufgebracht werden muß, so daß auch mit einem äußerst geringen Energieaufwand der Antrieb sicher betreibbar ist. Das 5/3-Wegeventil steuert dabei als Antrieb den erwähnten doppelt wirkenden Pneumatikzylinder an, dessen Druckluftanschlüsse zum Abbremsen des Antriebes durch das 5/3-Wegeventil für die Dauer der Bremsphase gesperrt sind, so daß zum Abbremsen des Antriebes bei gesperrter Mittelstellung des 5/3-Wegeventils keine zusätzliche Bremsenergie notwendig ist.

Anhand der Zeichnung wird im folgenden die Erfindung näher erläutert. Es zeigt:
- Fig. 1: ein Blockschaltbild eines Antriebes mit mittlerer Hublänge in seiner rechten Ausgangslage;
- Fig. 2: den Antrieb aus Fig. 1 in seiner Mittelstellung;
- Fig. 3: den Antrieb aus den Fig. 1 und 2 in seiner linken Endlage;
- Fig. 4: ein Blockschaltbild eines Antriebes mit großer Hublänge in seiner rechten Ausgangslage;
- Fig. 5: ein Blockschaltbild eines Antriebes mit kurzer Hublänge in seiner Mittelstellung;
- Fig. 6: ein Zeitdiagramm der Signalverläufe beispielhaft für Antriebe mittlerer Hublänge.

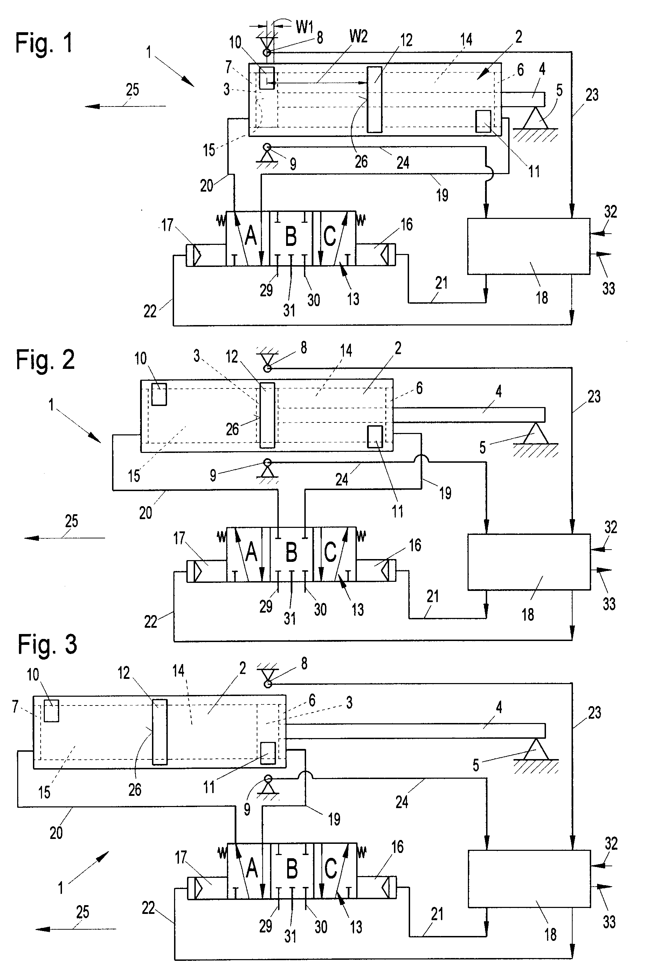

Fig. 1 zeigt einen Antrieb 1 in prinzipieller Darstellung. Der Antrieb 1 wird durch einen Hubzylinder 2 gebildet, in welchem ein Stellkolben 3 mit einer Kolbenstange 4 geführt ist. Die Kolbenstange 4 ist über ein entsprechendes Festlager 5 ortsfest gelagert, so daß der Hubzylinder 2 das bewegte Bauteil des Antriebes 1 bildet. Die Kolbenstange 4 durchragt die rechte Stirnwand 6 des Hubzylinders 2 in axialer Richtung.

In Fig. 1 ist der Hubzylinder 2 in seiner rechten Ausgangslage dargestellt, so daß sich der Stellkolben 3 im Bereich der linken geschlossenen Stirnwand 7 des Hubzylinders 2 befindet. Im linken Endbereich des Hubzylinders 2 sind zwei Sensoren 8 und 9 vorgesehen, wobei der erste Sensor 8 oberhalb der vom Hubzylinder 2 definierten Bewegungsbahn des Antriebes 1 und der zweite Sensor 9 dem ersten Sensor 8 gegenüberliegend unterhalb der Bewegungsbahn des Hubzylinders 2 angeordnet ist. Die gezeigte Anordnung der Sensoren 8 und 9 ist lediglich prinzipieller Art. Bei der Anrodung der Sensoren 8 und 9 kommt es je nach Beschaltung lediglich darauf an, daß sich diese nicht gegenseitig beeinflussen und auch nicht von den ihnen jeweils nicht zugeordneten Schaltfahnen 10 bzw. 11 in Wirkzusammenhang gebracht werden können. Die axiale Position der Sensoren 8 und 9 in Richtung der Längsmittelachse des Antriebes 1 liegt dabei etwa in der Mitte zwischen den beiden in den Fig. 1 und 3 dargestellten Endlagen des Hubzylinders 2 des Antriebes 1. Dem ersten Sensor 8 ist am linken Ende des Hubzylinders 2 eine Schaltfahne 10 zugeordnet, welche in der gezeigten Lage des Hubzylinders 2 im Wirkbereich des ersten Sensors 8 liegt.

Im rechten Endbereich des Hubzylinders 2 ist eine zweite Schaltfahne 11 vorgesehen, welche in ihrer Ausrichtung dem zweiten Sensor 9 zugeordnet ist und, wie dies aus Fig. 3 ersichtlich ist, in der linken Endstellung des Hubzylinders 2 im Wirkbereich des zweiten Sensors 9 liegt.

Etwa in der axialen Mitte des Hubzylinders 2 ist eine dritte Schaltfahne 12 vorgesehen, die in ihrer Ausrichtung derart ausgebildet ist, daß sie, wie dies aus Fig. 2 ersichtlich ist, im Wirkbereich beider Sensoren 8 und 9 liegt und sich somit annähernd über die gesamte Breite des Hubzylinders 2 erstreckt.

Zur Ansteuerung des Antriebes 1 ist ein 5/3-Wegeventil 13 vorgesehen, welches in gesperrter Mittelstellung dargestellt ist, welche der Ruhestellung des 5/3-Wegeventils 13 entspricht. Wie aus den Fig. 1 bis 3 erkennbar ist, handelt es sich bei dem Antrieb 1 um einen doppelseitig beaufschlagbaren Pneumatikzylinder, dessen linke und rechte Druckkammer (Fig. 2) 14, 15 über das 5/3-Wegeventil 13 wechselseitig beaufschlagbar sind.

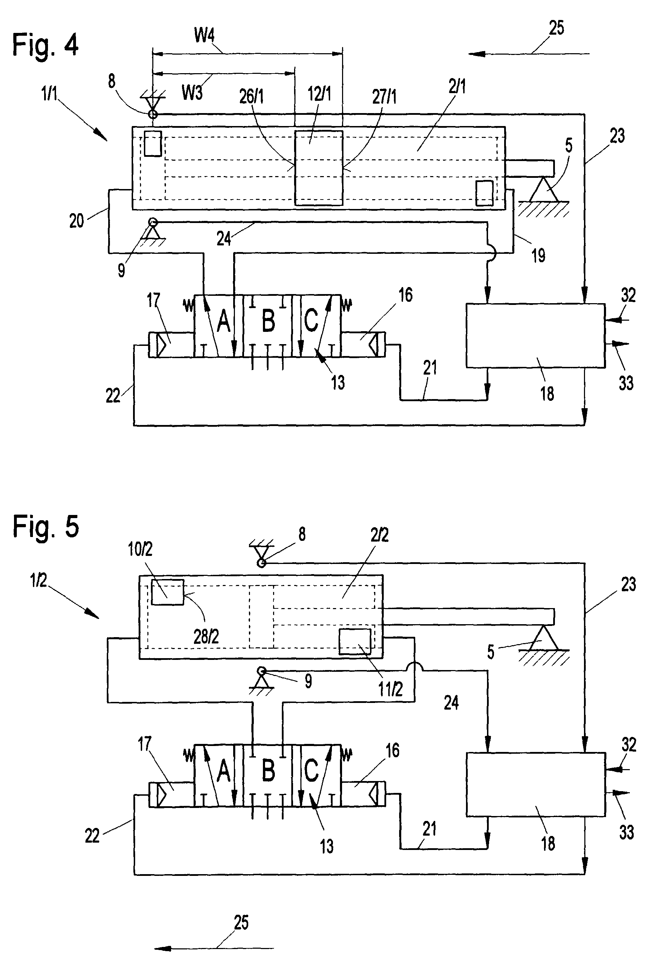

Das 5/3-Wegeventil 13 ist mittels zweier elektromagnetischer Steuermagnete 16 bzw. 17 ansteuerbar, wobei die elektrische Ansteuerung des 5/3-Wegeventiles mit seinen Steuermagneten 16, 17 durch eine Steuereinrichtung 18 erfolgt. In unbestromtem Zustand der Steuermagnete 16 und 17 befindet sich das 5/3-Wegeventil in der in Fig. 2 und 5 dargestellten Mittellage **B**. Das 5/3-Wegeventil 13 ist mit der rechten Druckkammer 14 über eine entsprechende rechte Druckleitung 19 und mit der linken Druckkammer 15 des Antriebes 1 über eine zweite linke Druckleitung 20 verbunden. Das 5/3-Wegeventil ist seinerseits über einen entsprechenden Druckversorgungsanschluß an eine Druckversorgungseinheit (in der Zeichnung nicht dargestellt) angeschlossen, durch welchen der Antrieb mit Systemdruck versorgt wird.

Zur elektrischen Ansteuerung der Elektromagnete 16 und 17 sind entsprechende Steuerleitungen 21 bzw. 22 vorgesehen, über welche das 5/3-Wegeventil 13 durch die Steuereinrichtung 18 ansteuerbar ist. Desweiteren ist die Steuereinrichtung über jeweils eine entsprechende Signalleitung 23 bzw. 24 mit dem Sensor 8 bzw. 9 verbunden, so daß die von den Sensoren 8 und 9 abgegebenen Signale der Steuereinrichtung 18 zuführbar sind.

Fig. 1 zeigt die Ausgangsstellung des Hubzylinders 2 für eine Stellbewegung in Richtung des Pfeiles 25 von rechts nach links. In dieser gezeigten Ausgangslage, welche die Endlage bei einer Bewegung in entgegengesetzter Richtung darstellt, liegt die Schaltfahne 10 dem ersten Sensor 8 gegenüber und somit in dessen Wirkbereich. Über eine übergeordnete Steuerung (in der Zeichnung nicht dargestellt) wird der Steuereinrichtung 18 ein Startsignal übermittelt, wodurch das 5/3-Wegeventil 13 über die Steuereinrichtung 18 durch bestromen des linken Steuermagneten 17 aktiviert wird. Das Startsignal der übergeordneten Steuerung ist durch den Pfeil 32 angedeutet. Durch die Aktivierung wird das 5/3-Wegeventil in die in Fig. 1 dargestellte Schaltstellung **A** gebracht und öffnet die linke Druckleitung 20, so daß die linke Druckkammer 15 des Hubzylinders 2 mit Druck beaufschlagt wird, wobei gleichzeitig die Druckkammer 14 mit dem Rücklaufanschluß 30 des 5/3-Wegeventils 13 verbunden wird. Mit der Aktivierung des 5/3-Wegeventils wird durch die Steuereinrichtung 18 an die übergeordnete Steuerung ein Bestätigungssignal (Pfeil 33) im Sinne einer Rückmeldung übergeben, wodurch der ordnungsgemäße Betrieb bestätigt wird.

Durch die Druckbeaufschlagung in der Druckkammer 15 des Hubzylinders 2 bewegt sich dieser in Pfeilrichtung des Pfeiles 25 von rechts nach links. Nach Zurücklegen der Wegstrecke **W**_{**1**} bewegt sich die Schaltfahne 10 mit ihrer Hinterkante aus dem Wirkungsbereich des ersten Sensors 8 heraus. In diesem Moment gibt der erste Sensor 8 ein Meßsignal **S**_{**0**} an die Steuereinrichtung 18 ab, dessen Zeitpunkt **T**_{**0**} in der Steuereinrichtung 18 erfaßt und zwischengespeichert wird.

Nach Zurücklegen einer weiteren Wegstrecke **W**_{**2**} kommt die dritte, mittlere Schaltfahne 12 mit ihrer Vorderkante 26 in den Wirkbereich des ersten Sensors 8 und löst ihrerseits wiederum ein zweites Meßsignal **S**_{**1**} im ersten Sensor 8 aus, welches über die Steuerleitung 23 ebenfalls an die Steuereinrichtung 18 weitergegeben wird. Die Steuereinrichtung 18 erfaßt den Zeitpunkt **T**_{**1**} des zweiten Meßsignals **S**_{**1**}.

Aus dem zeitlichen Abstand **t**₁ des ersten Meßsignals **S**_{**0**} und des zweiten Meßsignals **S**_{**1**} errechnet nun die Steuereinrichtung 18 den Zeitpunkt **T**_{**2**} des Beginns und den Zeitpunkt **T**_{**3**} des Endes einer Bremsphase **t**_{**3**}, durch welche der Hubzylinder 2 soweit abgebremst werden soll, daß er seine in Fig. 3 dargestellte Endlage sanft, d.h. mit geringer Geschwindigkeit anfahren kann.

In Fig. 2 ist dabei die Schaltstellung **B** des 5/3-Wegeventiles während der Bremsphase **t**_{**3**} dargestellt. Durch die Steuereinrichtung wird somit zum Zeitpunkt **T**_{**2**} der Beginn der Bremsphase **t**_{**3**} festgelegt, wodurch durch entsprechende Ansteuerung des 5/3-Wegeventiles über die Steuereinrichtung 18 beide Druckleitungen 19 und 20 gesperrt werden, da sich das 5/3-Wegeventil in seiner Ruhestellung, wie in Fig. 2 dargestellt ist, befindet. Durch die Sperrung beider Druckleitungen 19 und 20 und der weiteren Bewegung des Hubzylinders 2 in Richtung des Pfeiles 25 baut sich in der Druckkammer 14 ein Staudruck in Form eines Luftpolsters und in der Druckkammer 15 ein Unterdruck auf, so daß der Hubzylinder 2 bei seiner weiteren Bewegung in Richtung des Pfeiles 25 abgebremst wird. Um nun zu verhindern, daß der Hubzylinder 2 vollständig abgebremst wird und eventuell in entgegengesetzter Richtung zum Pfeil 25 wieder in seine ursprüngliche Ausgangslage oder irgendeine beliebige Mittelstellung zurückfährt, wird am Ende der Bremsphase **t**₃ zum Zeitpunkt **T**₃ das Ende der Bremsphase durch die Steuereinrichtung berechnet, und das 5/3-Wegeventil 13 wiederum in Richtung der ursprünglichen Bewegungsrichtung des Pfeiles 25 des Hubzylinders 2 in Schaltstellung **A** geschaltet, wie dies beispielhaft in Fig. 3 dargestellt ist, so daß die Druckleitung 20 wieder mit Systemdruck beaufschlagt wird und die Druckleitung 19 wieder für den Rücklauf 30 freigeschaltet wird. Somit bewegt sich nach der Bremsphase **t**_{**3**} der Hubzylinder 2 in die in Fig. 3 dargestellt Endlage.

Dabei ist vorgesehen, daß sich kurz vor der Endlage durch entsprechende Ausgestaltung des Hubzylinder 2 und des Stellkolbens 3 in der rechten Druckkammer 14 ein kleines Druckpolster kurz vor dem Ende der Bewegungsphase des Hubzylinders 2 aufbaut, so daß ein harter Anschlag in der Endlage des Hubzylinders 2 ausgeschlossen ist. Dieses kleine Luftpolster am Ende der Bewegungsphase kann dabei durch ein Drosselventil bzw. eine Drosselbohrung die in die Druckleitung 20 mündet abgebaut werden.

Es versteht sich, daß das 5/3-Wegeventil 13 für eine Bewegung aus seiner in Fig. 3 dargestellten Endlage in entgegengesetzter Richtung zum Pfeil 25, in umgekehrtem Sinne durch bestromen des rechten Steuermagneten 16 aktiviert wird. Das 5/3-Wegeventil wird dabei in seine Schaltstellung **C** geschaltet, so daß eine entsprechende Druckbeaufschlagung der Druckkammer 14 des Antriebes 1 erfolgt. Zur Erzeugung des ersten Meßsignals **S**_{**0**} zum Zeitpunkt **T**_{**0**} wird die zweite Schaltfahne 11 in Zusammenwirken mit dem zweiten Sensor 9, entsprechend der Schaltfahne 10 in Zusammenwirken mit dem Sensor 8 bei entgegengesetzter Bewegungsrichtung, benutzt. Das zweite Meßsignal **S**_{**1**} zum Zeitpunkt **T**_{**1**} wird durch die mittlere Schaltfahne 12 in Zusammenwirken mit dem Sensor 9 oder mit beiden Sensoren 9 und 10 erzeugt, so daß die Zeitdifferenz **t**_{**1**} für die zweite Bewegungsrichtung entgegen des Pfeiles 25 festgelegt ist und die weiteren Berechnungen, wie zu den Figuren 1 bis 3 bereits beschrieben, entsprechend durchführbar sind.

Fig. 4 zeigt ein Blockschaltbild eines Antriebes 1/1, welcher eine größere Hublänge aufweist, als der Antrieb 1 aus den Fig. 1 bis 3. Der Hubzylinder 2/1 befindet sich ebenfalls in seiner rechten Ausgangslage. Das 5/3-Wegeventil befindet sich zur Einleitung der Bewegungsphase, wie bereits zu Fig. 1 beschrieben, in seiner Schaltstellung **A**.

Bei solchen Antrieben 1/1 ist zur Ansteuerung des 5/3-Wegeventiles 13 die mittlere Schaltfahne 12/1 länger ausgebildet und dient zum Erzeugen des ersten Meßsignals **S**_{**0**} und des zweiten Meßsignals **S**_{**1**}. So wird bei solchen Antrieben 1/1 größerer Länge das erste Meßsignal **S**₁ erst beim Eintritt der mittleren Schaltfahne 12/1 in den Wirkbereich des ersten Sensores 8 erzeugt und an die Steuereinrichtung 18 übergeben. Dies geschieht nachdem der Hubzylinder 2/1 des Antriebes 1/1 einen Stellweg **W**₃ zurückgelegt hat, nach welchem die mittlere Schaltfahne 12/1 mit ihrer Vorderkante 26/1 in den Wirkbereich des ersten Sensores 8 eintritt. Nach Zurücklegen eines Stellweges **W**_{**4**} des Hubzylinders 2/1 verläßt die mittlere Schaltfahne 12/1 mit ihrer Hinterkante 27/1 den Wirkbereich des ersten Sensores 8, so daß erneut ein Signal erzeugt wird, welches als zweites Meßsignal **S**₁ über die Steuerleitung 23 an die Steuereinrichtung 18 übergeben wird. Die beiden Zeiten **T**₀ und **T**₁, zu welchen die beiden Signale, das Meßsignal **S**₀ und das Meßsignal **S**₁, an die Steuereinrichtung 18 übergeben werden, werden in der Steuereinrichtung 18 zwischengespeichert, und aus deren zeitlichen Differenz **t**₁ wird ebenfalls die Bremsphase **t**_{**3**} zum sanften Anfahren der Endlage des Antriebes 1/1 bzw. dessen Hubzylinders 2/1 berechnet. Die Ansteuerung des 5/3-Wegeventils entspricht dabei der Funktionsweise des Antriebes 1 aus den Fig. 1 bis 3.

In Fig. 5 ist ein Antrieb mit kurzer Hublänge in seiner Mittelstellung dargestellt, welcher sich in Pfeilrichtung 25 bewegt. In dieser Mittelstellung ist die Bremsphase **t**_{**3**} bereits eingeleitet, so daß sich das 5/3-Wegeventil in seiner stromlosen Mittelstellung **B** befindet. Bei diesem Antrieb kurzer Hublänge können die beiden Schaltfahnen 10/2 und 11/2 in ihrer Länge etwas größer ausgebildet sein, als die Schaltfahnen 10 und 11 aus den Fig. 1 bis 3, wobei beim Ausführungsbeispiel gemäß der Fig. 5 als erstes Meßsignal **S**₀ das Startsignal **S**_{**Start**} der übergeordneten Steuereinrichtung für den Bewegungsstart verwendet wird. In dem Moment, in welchem sich die Schaltfahne 10/2 mit ihrer Hinterkante 28/2 bei einer Bewegung in Pfeilrichtung des Pfeiles 25 aus dem Wirkbereich des Sensores 8 heraus begibt, wird das zweite Meßsignal **S**₁ erzeugt und aus diesem zweiten Meßsignal **S**₁ und dem Startsignal **S**_{**Start**} die Zeitdifferenz **t**_{**1**} ermittelt. Aus dieser Zeitdifferenz **t**₁ wird wiederum der zeitliche Beginn **T**_{**2**} und das zeitliche Ende **T**_{**3**} der Bremsphase zum sanften Anfahren der Endlage des Hubzylinders 2/2 des Antriebes 1/2 berechnet. Die Umschaltung des jeweils ebenfalls vorgesehenen 5/3-Wegeventils 13, sowohl beim Ausführungsbeispiel des Antriebes 1/1 gemäß der Fig. 4 als auch des Antriebes 1/2 gemäß der Fig. 5, erfolgt in gleicher Weise, wie dies bereits zu den Fig. 1 bis 3 beschrieben wurde.

Desweiteren wird das Zeitintervall **t**₁ zwischen dem Auftreten des ersten Meßsignals **S**₀ und des zweiten Meßsignals **S**₁ für eine voreilende Rückmeldung bzw. für deren Berechnung verwendet, so daß weitere Bewegungsvorgänge eines Gesamtsystems steuerbar sind und frühzeitig gestartet werden können.

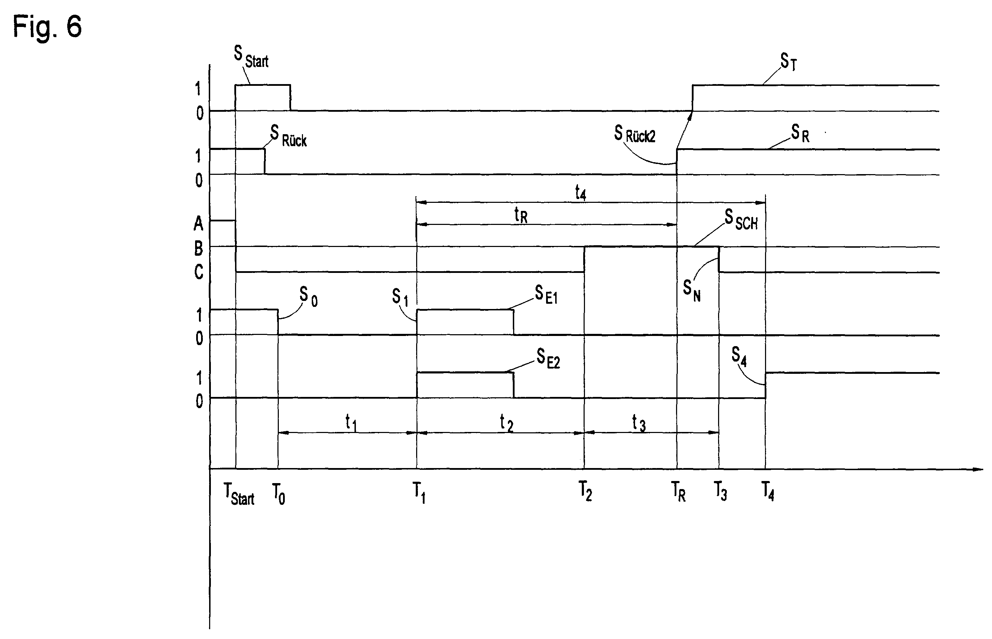

Fig. 6 zeigt das prinzipielle Zeitdiagramm für Antriebe mittlerer Hublänge. Dabei ist einerseits der Signalverlauf **S**_{**T**} der übergeordneten Steuerung, der Signalverlauf **S**_{**R**} für die Rückmeldung sowie die Schaltstellungen **S**_{**SCH**} des 5/3-Wegeventiles wie auch die Signalfolgen **S**_{**E1**} und **S**_{**E**}₂ der beiden Sensoren 8 und 9 aus den Fig. 1 bis 5 dargestellt. Die Signalfolge ist dabei über die Zeit und für eine Bewegung eines Antriebes aus seiner rechten Ausgangsposition in seine linke Endlage dargestellt. Zum Zeitpunkt **T**_{**Start**} wird von der übergeordneten Steuerung ein Startsignal **S**_{**Start**} abgegeben, wodurch der Beginn der Bewegung des Antriebes bewirkt wird. Etwas zeitverzögert wird durch eine entsprechende Rückmeldung ein Rückmeldesignal **S**_{**Rück**} an die übergeordnete Steuereinrichtung ausgegeben, wodurch dieser der ordnungsgemäße Betrieb des Antriebes bestätigt wird. Nach Zurücklegen einer bestimmten Wegstrecke, welche beispielsweise die Wegstrecke **W**₁ aus Fig. 1 ist, wird zu einem Zeitpunkt **T**₀ ein Meßsignal **S**₀ an die untergeordnete Steuereinrichtung 18 (Fig. 1 bis 5) übergeben und dort zwischengespeichert. Nach dem Zurücklegen der Wegstrecke **W**₂ (Fig. 1) wird über die Schaltfahne 12 bei Eintritt in den Wirkbereich des Sensor 8 durch diesen das zweite Meßsignal **S**₁ zum Zeitpunkt **T**₁ erzeugt. Aus den Zeitpunkten **T**₀ des ersten Meßsignals **S**₀ und **T**₁ des zweiten Meßsignals **S**₁ wird die Zeitdifferenz **t**₁ beider Signale erfaßt, aus welcher der Beginn **T**₂ und das Ende **T**₃ der Bremsphase **t**_{**3**} berechnet wird. Zum Beginn der Bremsphase **t**_{**3**} wird ein Steuersignal für das 5/3-Wegeventil 13 erzeugt, durch welches dieses nach dem Zeitraum **t**_{**2**} in seine mittlere Ruhestellung zurückgestellt wird, wie dies aus Fig. 6 aus dem Signalverlauf für die Schaltstellung **S**_{**SCH**} des 5/3-Wegeventils 13 ersichtlich ist.

Am Ende der Bremsphase zum Zeitpunkt **T**₃ wird zum sicheren Anfahren der Endstellung des Antriebes nach Ablauf des Zeitintervalles **t**₃ das 5/3-Wegeventil wieder in seine ursprüngliche Schaltstellung geschaltet, so daß der Antrieb in seiner ursprünglichen Bewegungsrichtung wieder angetrieben wird und, wie bereits oben beschrieben, gegen ein Restluftpolster am Ende seiner Bewegungsphase aufläuft und sicher in seine Endlage gebracht wird. Es versteht sich, daß bei umgekehrter Bewegungsrichtung eine entsprechende umgekehrte Ansteuerung des 5/3-Wegeventiles erfolgt, wobei zum Erzeugen der entsprechenden Schaltsignale der jeweils zweite Sensor 9 in entsprechendem Zusammenwirken mit den zugeordneten Schaltfahnen 11 und 12 verwendet wird.

In den Fig. 1 bis 5 sind beispielhaft zur Erläuterung des erfindungsgemäßen Verfahrens und der Vorrichtung zur Durchführung dieses Verfahrens Linearantriebe unterschiedlicher Bauart mit Kolbenstange dargestellt. Es können mit dem Erfindungsgemäßen Verfahren selbstverständlich auch Linearantriebe mit kolbentangenlosem Kolben gesteuert werden. Es versteht sich, daß das erfindungsgemäße Verfahren und die erfindungsgemäße Vorrichtung ebenfalls für Antriebe anderer Bauart insbesondere auch für rotatorisch, pneumatische Antriebe einsetzbar ist. Auch ist eine Verwendung mit einer Anordnung der Schaltfahnen oder der Sensoren an der Kolbenstange vorstellbar. Wesentlich ist, daß für die Steuerung des Antriebes eine Zeitmessung zu Beginn oder während der Bewegungsphase des Antriebes vorgenommen wird, aus welcher die Steuerung weiterer zeitlich später liegenden Funktionen des Antriebes selbst oder auch anderer mit diesem Antrieb in Funktionszusammenhang stehender Baugruppen berechenbar ist.

Weiter ist aus Fig. 6 ersichtlich, daß ein Rückmeldesignal **S**_{**Rück2**} vor Beendigung der Bewegungsphase des Antriebes an die übergeordnete Steuerung übergeben wird, wodurch diese einen weiteren Bewegungsablauf beispielsweise eines zweiten Antriebes einleiten kann. Diese voreilende Rückmeldung wird ebenfalls aus der Zeitmessung der Zeitdifferenz **t**_{**1**} abgeleitet und von der Steuereinrichtung 13 berechnet. Durch die voreilende Rückmeldung bzw. dieses voreilende Rückmeldesignal **S**_{**Rück2**} werden beispielsweise Schaltzeiten eines Schaltventiles für den zweiten Antrieb kompensiert, welcher nach erreichen der Endlage des Linearantriebes 1, 1/1 bzw. 1/2 aktiviert werden soll. Der Zeitpunkt **T**_{R} für dieses zweite Rückmeldesignal **S**_{**Rück**}₂ wird ebenfalls aus dem Zeitintervall **t**₁ errechnet, so daß eine sichere Funktionsweise gewährleistet ist.

Kurz vor oder im Moment des Erreichens der Endlage des Antriebes wird durch die zweite Schaltfahne zum Zeitpunkt **T**_{**4**} ein Bestätigungssignal **S**_{**4**} in Sinne einer Fertigmeldung ausgegeben, so daß die ordnungsgemäße Funktion des Antriebes sichergestellt ist.

Die Signalverläufe für Antriebe kurzer und langer Hublänge sind entsprechend ausgebildet, wobei die Zeit **T**_{**0**} und **T**_{**1**} entsprechend der verwendeten Schaltfahnen lediglich zu anderen Zeitpunkten erfaßt werden, um den Beginn **T**_{**2**} und das Ende **T**_{**3**} der Bremsphase **t**_{**3**} zu berechnen.

Durch die zeitliche Erfassung verschiedener Meßsignale beim erfindungsgemäßen Verfahren bzw. bei der erfindungsgemäßen Vorrichtung wird in einfachster Weise eine Bremsphase durch die Steuereinrichtung errechnet und das 5/3-Wegeventil des Antriebes zum sanften Anfahren einer seiner Endlagen entsprechend geschaltet. Mit dem erfindungsgemäßen Verfahren wird ein äußerst einfacher Schaltungsaufbau erreicht, wodurch Kosten einsparbar sind. Desweiteren ist dieses erfindungsgemäße Verfahren wie auch die erfindungsgemäße Vorrichtung zur Durchführung dieses Verfahrens in einfachster Weise an bestehende Antriebe anpaßbar, da lediglich an dem bewegten Bauteil des entsprechenden Antriebes die Schaltfahnen anzubringen sind. Die Anordnung der Sensorik ist dabei beliebig wählbar, wobei bei dem gezeigten Ausführungsbeispiel beide Sensoren für beide Bewegungsrichtungen in unmittelbarer Nähe zur Bewegungsbahn des bewegten Bauteiles des Antriebes angeordnet sind, so daß sie wechselseitig durch die Schaltfahnen beschaltbar sind und dementsprechend, je nach dem Bewegungszustand des Antriebes, Meßsignale an die Steuereinrichtung abgeben.

Desweiteren ist vorgesehen, daß verschiedene Standardzeiten, welche den entsprechenden Zeitintervallen **t**₁, **t**₂ und **t**_{**3**} entsprechend vorgebbar sind. Diese Standardwerte sind dabei empirisch für unterschiedliche Ausführungsformen von Antrieben ermittelbar und dienen dazu, daß im Falle von Fehlfunktionen des Antriebes durch Vergleich der Standardwerte mit den tatsächlich gemessenen Zeitintervallen Störungen im Betrieb des Antriebes jederzeit feststellbar sind und ein sicheres Abschalten gewährleistet ist.

Durch die Ansteuerung des Antriebes über ein 5/3-Wegeventil ist eine Art Not-Aus-Funktion sichergestellt, da bei Stromausfall oder sonstigen Störungen das 5/3-Wegeventil stets in seine Ruhestellung zurückgestellt wird, in welcher gleichzeitig beide Druckleitungen des Antriebes gesperrt sind. Damit ist sichergestellt, daß der Antrieb im Störfall stets zum Stillstand kommt und somit keine Beschädigungen des Antriebes erfolgen können.

Desweiteren ist ebenfalls ausgeschlossen, daß mit dem Antrieb in Verbindung stehende oder von diesem Bewegte Peripheriegeräte beschädigt werden können.

## Patentansprüche

1. Verfahren zum Steuern wenigstens eines fluidischen Antriebes mit einer elektronischen Steuereinrichtung zum Ansteuern wenigstens eines Steuerelementes für den Antrieb, wobei der Steuereinrichtung für wenigstens eine Bewegungsrichtung des Antriebes durch wenigstens einen über wenigstens eine Schaltfahne elektronisch schaltbaren Sensor Steuersignale zugeführt werden,
**dadurch gekennzeichnet**,
daß zur Ermittlung des Bewegungszustandes des Antriebes (1, 1/1, 1/2) zu einem Zeitpunkt (**T**_{**0**}) ein erstes Meßsignal (**S**_{**0**}) und zu einem späteren, in der Bewegungsphase des Antriebes (1, 1/1, 1/2) liegenden Zeitpunkt (**T**_{**1**}) ein zweites Meßsignal (**S**_{**1**}) erzeugt wird, und
daß die Steuereinrichtung (18) unter Berücksichtigung der tatsächlichen Bewegungsparameter des Antriebes (1, 1/1, 1/2) aus der Zeitdifferenz (**t**_{**1**}) des ersten Meßsignals (**S**_{**0**}) und des zweiten Meßsignals (**S**_{**1**}) die Zeitspannen (**t**_{**2**}, **t**_{**3**}, **t**_{**4**}, **t**_{**R**}) für den Beginn und/oder die Dauer weiterer nachfolgender Funktionen des Antriebes und/oder weiteren mit dem Antrieb in Funktionszusammenhang stehender Baugruppen berechnet.

2. Verfahren nach Anspruch 1, dadurch gekennzeichnet,
daß das erste Meßsignal (**S**_{**0**}) direkt von einem Startsignal (**S**_{**Start**}) der Steuereinrichtung (18) oder einer übergeordneten Steuerung abgeleitet wird, das zur Einleitung der Bewegung des Antriebes (1/2) aus seiner ersten Endlage zum Startzeitpunkt (**T**_{**Start**}) verwendet wird, und
daß ein erster Sensor (8) das zweite Meßsignal **S**_{**1**} in dem Zeitpunkt (**T**_{**1**}) erzeugt, in welchem eine erste Schaltfahne (10/2) seinen Wirkbereich nach dem Beginn der Bewegungsphase des Antriebes (1/2) verläßt.

3. Verfahren nach Anspruch 1, dadurch gekennzeichnet,
daß das erste Meßsignal (**S**_{**0**}) nach dem Startsignal **S**_{**Start**} der Steuereinrichtung (18) oder der übergeordneten Steuerung während der Bewegungsphase des Antriebes (1) beim Austritt einer ersten Schaltfahne (10) aus dem Wirkbereich eines ersten Sensors (8) erzeugt wird und den Zeitpunkt (**T**_{**0**}) bestimmt, und
daß das zweite Meßsignal **S**_{**1**} zu einem späteren Zeitpunkt (**T**_{**1**}) der Bewegungsphase des Antriebes (1) mittels einer weiteren, der ersten Schaltfahne (10) nachgeordneten Schaltfahne (12) durch Eintreten der weiteren Schaltfahne (12) in den Wirkbereich des Sensors (8) erzeugt wird.

4. Verfahren nach Anspruch 1, dadurch gekennzeichnet,
daß das erste Meßsignal (**S**_{**0**}) zum Zeitpunkt (**T**_{**0**}) durch eine etwa mittig am bewegten Bauteil (2/1) des Antriebes (1/1) angeordnete Schaltfahne (12/1) beim Eintritt in den Wirkbereich eines ersten Sensors (8) erzeugt wird, und
daß das zweite Meßsignal (**S**_{**1**}) zum Zeitpunkt (**T**_{**1**}) beim Verlassen des Wirkbereiches des Sensors (8) der mittigen Schaltfahne (12/1) erzeugt wird.

5. Verfahren nach einem der Ansprüche 1 bis 4, dadurch gekennzeichnet, daß die Steuereinrichtung (18) zum sanften Anfahren wenigstens einer der Endlagen des Antriebes (1, 1/1, 1/2) aus der Zeitdifferenz (**t**_{**1**}) eine Zeitspanne (**t**_{**2**}) für den Beginn einer Bremsphase des Antriebes zu einem Zeitpunkt (**T**_{**2**}) und die Dauer der Bremsphase (**t**_{**3**}) bis zu einem Zeitpunkt (**T**_{**3**}) berechnet, und
daß die Steuereinrichtung (18) zum Abbremsen des Antriebes (1, 1/1, 1/2) an das Steuerelement (13) ein Bremssignal für den Beginn und für das Ende der Bremsphase abgibt.

6. Verfahren nach Anspruch 5, dadurch gekennzeichnet,
daß zum Zeitpunkt (**T**_{**3**}) ein Nachlaufsignal (**S**_{**N**}) erzeugt wird, durch welches über die Steuereinrichtung (18) und das Steuerelement (13) der Antrieb (1, 1/1, 1/2) zum sicheren Erreichen seiner Endlage wieder in Bewegungsrichtung (Pfeil 25) beaufschlagt wird.

7. Verfahren nach Anspruch 5 oder 6, dadurch gekennzeichnet, daß die Steuereinrichtung (18) aus der Zeitdifferenz (**t**_{**1**}) zusätzlich zu den Zeitspannen (**t**_{**2**}) und (**t**_{**3**}) und den zugehörigen Zeitpunkten (**T**_{**2**}) und (**T**_{**3**}) eine weitere Zeitspanne (**t**_{**R**}) für einen Zeitpunkt (**T**_{**R**}) berechnet, zu welchem ein Rückmeldesignal (**S**_{**Rück2**}) zum Einleiten weiterer nachfolgender Funktionen weiterer mit dem Antrieb in Funktionszusammenhang stehender Bauteile erzeugt wird.

8. Verfahren nach einem der Ansprüche 1 bis 7, dadurch gekennzeichnet, daß die Steuereinrichtung (18) aus der Zeitdifferenz (**t**_{**1**}) eine weitere Zeitspanne (**t**_{**4Soll**}) für einen Zeitpunkt (**T**_{**4Soll**}) berechnet wird, welcher dem theoretischen Ende der Bewegungsphase des Antriebes (1, 1/1, 1/2) entspricht und daß zum Zeitpunkt (**T**_{**4**}) am Ende der Bewegungsphase des Antriebes (1, 1/1, 1/2) an die Steuereinrichtung (18) ein Bestätigungssignal (**S**_{**4**}) für das tatsächliche Erreichen der Endlage abgegeben wird.

9. Verfahren nach einem der Ansprüche 1 bis 8, dadurch gekennzeichnet, daß zu den tatsächlich gemessenen Zeitpunkten (**T**_{**0**}, **T**_{**1**} und **T**_{**4**}) und den zugehörigen Zeitintervallen (**t**_{**0**}, **t**_{**1**} und **t**_{**4**}) Standardwerte (**T**_{**0st**}, **T**_{**1st**} und **T**_{**4st**}) und (**t**_{**0st**}, **t**_{**1st**} und **t**_{**4st**}) vorgebbar sind, mit welchen die gemessenen Zeiten durch die Steuereinrichtung verglichen werden und,
daß bei Überschreiten von vorbestimmbaren Zeitdifferenzen zwischen den gemessenen Zeiten (**T**_{**0**}, **T**_{**1**} und **T**_{**4**}) bzw. Zeitintervallen (**t**_{**0**}, **t**_{**1**} und **t**_{**4**}) und den vorgegebenen Standardwerten (**T**_{**0st**}, **T**_{**1st**} und **T**_{**4st**} bzw. **t**_{**0st**}, **t**_{**1st**} und **t**_{**4st**}) an einer Anzeigeeinrichtung der Steuereinrichtung (18) oder einer übergeordneten Steuerung eine Fehlermeldung ausgeben wird, die zu berechnenden Zeiten korrigiert werden und/oder der Antrieb (1, 1/1, 1/2) abgeschaltet wird.

10. Vorrichtung zur Durchführung des Verfahrens nach Anspruch 1 oder 2 mit einem fluidischen Antrieb und einer elektronischen Steuereinrichtung zum Ansteuern wenigstens eines Steuerelementes für den Antrieb, wobei der Steuereinrichtung für wenigstens eine Bewegungsrichtung des Antriebes durch wenigstens einen über wenigstens eine Schaltfahne elektronisch schaltbaren Sensor Steuersignale zugeführt werden,
**dadurch gekennzeichnet**,
daß für eine erste Bewegungsrichtung (Pfeil 25) des Antriebes (1, 1/1, 1/2) ein erster Sensor (8) vorgesehen ist, der etwa mittig zwischen den beiden Endlagen des Antriebes (1, 1/1, 1/2) ortsfest in unmittelbarer Nähe zur Bewegungsbahn des bewegten Bauteiles (2, 2/1) des Antriebes (1, 1/1, 1/2) angeordnet ist, und
daß eine erste Schaltfahne (10) vorgesehen ist, die an einem Ende des bewegten Bauteils des Antriebes (1, 1/1, 1/2) angeordnet ist und sich in der einen Endlage des Antriebes (1, 1/1, 1/2) im Wirkbereich des ersten Sensors (8) befindet, welchen die erste Schaltfahne (10) zum Erzeugen eines zweiten Meßsignals (**S**_{**1**}) durch den ersten Sensor (8) nach Beginn der Bewegungsphase des Antriebes (1, 1/1, 1/2) verläßt.

11. Vorrichtung nach dem Oberbegriff des Anspruches 10 zur Durchführung des Verfahrens nach Anspruch 1 oder 3,
**dadurch gekennzeichnet**,
daß für mittlere und längere Stellwege des Antriebes (1) für eine erste Bewegungsrichtung (Pfeil 25) des Antriebes (1) ein erster Sensor (8) vorgesehen ist, der etwa mittig zwischen den beiden Endlagen des Antriebes (1) ortsfest in unmittelbarer Nähe zur Bewegungsbahn des bewegten Bauteiles (2) des Antriebes (1) angeordnet ist, und
daß eine erste Schaltfahne (10) vorgesehen ist, die an einem Ende des bewegten Bauteils des Antriebes (1) angeordnet ist und sich in der einen Endlage des Antriebes (1) im Wirkbereich des ersten Sensors (8) befindet, welchen die erste Schaltfahne (10) zum Erzeugen eines ersten Meßsignals (**S**_{**0**}) durch den ersten Sensor (8) nach Beginn der Bewegungsphase des Antriebes (1, 1/1, 1/2) verläßt und,
daß eine weitere Schaltfahne (12) etwa mittig am bewegten Bauteil (2) des Antriebes (1) angeordnet ist, welche während der Bewegungsphase des Antriebes (1) beim Eintritt in den Wirkbereich des Sensors (8) ein zweites Meßsignal (**S**_{**1**}) im Sensor (8) erzeugt.

12. Vorrichtung nach dem Oberbegriff des Anspruches 10 zur Durchführung des Verfahrens nach Anspruch 1 oder 4,
**dadurch gekennzeichnet**,
daß für eine erste Bewegungsrichtung (Pfeil 25) des Antriebes (1/1) ein erster Sensor (8) vorgesehen ist, der etwa mittig zwischen den beiden Endlagen des Antriebes (1/1) ortsfest in unmittelbarer Nähe zur Bewegungsbahn des bewegten Bauteiles (2/1) des Antriebes (1/1) angeordnet ist, und
daß etwa mittig am bewegten Bauteil (2/1) des Antriebes (1/1) eine Schaltfahne (12/1) vorgesehen ist, welche während der Bewegungsphase des Antriebes (1/1) zum Erzeugen eines ersten Meßsignals (**S**_{**0**}) in den Wirkbereich des Sensors (8) eintritt und zum Erzeugen eines zweiten Meßsignals (**S**_{**1**}) zu einem späteren Zeitpunkt aus dem Wirkbereich des Sensors (8) wieder austritt.

13. Vorrichtung nach einem der Ansprüche 10 bis 12, dadurch gekennzeichnet, daß für die zweite Bewegungsrichtung (entgegen des Pfeiles 25) des Antriebes (1, 1/1, 1/2) und/oder für die erste Bewegungsrichtung ein zweiter Sensor (9) vorgesehen ist, welcher dem ersten Sensor (8) bezüglich der Bewegungsbahn des bewegten Bauteiles (2, 2/1, 2/2) des Antriebes (1, 1/1, 1/2) gegenüberliegend angeordnet ist.

14. Vorrichtung nach Anspruch 13, dadurch gekennzeichnet,
daß für kurze Stellwege des Antriebes (1/2) und zur Steuerung beider Bewegungsrichtungen in jedem Endbereich des bewegten Bauteiles (2/2) des Antriebes (1/2) jeweils eine Schaltfahne (10/2, 11/2) angeordnet ist, und
daß die eine Schaltfahne (10/2) in ihrer Ausrichtung dem ersten Sensor (8) und die andere Schaltfahne (11/2) in ihrer Ausrichtung dem zweiten Sensor (9) zugeordnet ist.

15. Vorrichtung nach Anspruch 13 oder 14 zur Durchführung einer der Verfahren nach Anspruch 1, 3 oder 4, dadurch gekennzeichnet, daß für mittlere und längere Stellwege des Antriebes (1, 1/2) zur Steuerung beider Bewegungsrichtungen eine dritte Schaltfahne (12, 12/1) vorgesehen ist, welche beiden Sensoren (8, 9) zugeordnet ist, und welche etwa mittig am bewegten Bauteil (2, 2/1) zwischen der ersten und der zweiten Schaltfahne (10, 11 bzw. 10/1, 11/1) angeordnet ist.

16. Vorrichtung nach einem der Ansprüche 10 bis 15, dadurch gekennzeichnet, daß als Steuerelement ein 5/3-Wegeventil (13) mit gesperrter Mittelstellung vorgesehen ist, durch welches beide Bewegungsrichtungen des Antriebes (1, 1/1, 1/2) steuerbar sind und,
daß als Antrieb (1, 1/1, 1/2) ein doppelt wirkender Pneumatikzylinder (2, 2/1, 2/2) mit zwei Druckkammern (14, 15) und einem aus einer Mittelstellung in beide Bewegungsrichtungen durch wechselnde Druckbeaufschlagung der Druckkammern (14, 15) bewegbaren Stellglied (3, 4) verwendet wird und,
daß zum Abbremsen des bewegten Bauteils (2, 2/1, 2/2) des Pneumatikzylinders (1, 1/1, 1/2) das 5/3-Wegeventil (13) in seiner gesperrten Mittelstellung die Anschlußleitungen (19, 20) beider Druckkammern (14, 15) des Pneumatikzylinders (1, 1/1, 1/2) für die Dauer der Bremsphase **t**_{**3**} schließt.
